# EUROPÄISCHE PATENTSCHRIFT

(11) **EP 2 289 742 B1**
(45) Veröffentlichungstag und Bekanntmachung des Hinweises auf die Patenterteilung: **11.12.2013**
(21) Anmeldenummer: 10171244.6
(22) Anmeldetag: 29.07.2010
(51) Int. Cl.: B60S 3/04, G07F 17/20

(54) **Halterung für eine Reinigungslanze und Fahrzeugwaschanlage**
Mounting for a cleaning lance and vehicle washing assembly
Fixation pour une lance de nettoyage et installation de lavage de véhicule

(30) Priorität: 28.08.2009 DE 202009011706 U
(43) Veröffentlichungstag der Anmeldung: 02.03.2011
(73) Patentinhaber: WashTec Holding GmbH, 86153 Augsburg (DE)
(72) Erfinder: Auer, Robert, 86391, Stadtbergen (DE)
(74) Vertreter: Charrier, Rapp & Liebau

(56) Entgegenhaltungen:
- DE-C1- 4 232 297
- US-A- 2 849 588
- US-A- 4 306 678
- US-A- 4 759 470
- US-A1- 2003 146 144
- US-A1- 2006 162 112

## Beschreibung

Die Erfindung betrifft eine Halterung für eine Reinigungslanze nach dem Oberbegriff des Anspruchs 1 sowie eine Fahrzeugwaschanlage nach dem Oberbegriff des Anspruchs 13.

Die eingangs genannte Halterung für eine Reinigungslanze und Fahrzeugwaschanlage ist aus der DE 42 26 712 A1 bekannt. Bei der dort gezeigten Anlage zum manuellen Reinigen von Kraftfahrzeugen ist an einer Tragsäule eine Halterung zur Aufnahme von Waschlanzen vorgesehen. Die Halterung ist entweder als zylinderförmiger Köcher oder als quaderförmiger Hohlkörper ausgebildet und schräg nach unten weisend an der Tragsäule angebracht. Aus der Halterung abtropfende Reinigungsflüssigkeit kann durch ein kurzes Rohrstück zu einem Abfluss im Inneren der Tragsäule abgeleitet werden. Hierdurch kann aus der Waschlanze nachlaufendes Waschwasser einfach abgeleitet werden.

Derartige Haltungen für Waschlanzen, besonders die zur Aufnahme der Waschlanze vorgesehenen Köcher oder Hohlkörper, werden von vielen Benutzern als Abfalleimer missbraucht. Hierdurch wird der Flüssigkeitsablauf am unteren Ende des Köchers verstopft, so dass aus der Reinigungslanze nachlaufende Flüssigkeit aufgestaut wird, bis sie aus dem oberen Ende des Köchers überläuft. Durch die im Köcher gesammelten Abfälle, insbesondere Zigarettenkippen, wird zudem die Waschlanzendüse verstopft oder Waschlanzenbürsten verschmutz. Hinzu kommt, dass bei Fahrzeugwaschanlagen in kälteren Regionen mit Frost-und Eisbildung das Vereisen der Waschlanzendüse oder -bürste dadurch verhindert wird, dass ständig ein wenig Flüssigkeit durch die Waschlanze läuft. Diese ständig durchlaufende Flüssigkeit muss am Ende des Köchers ablaufen können. Ist dies nicht möglich, so füllt sich der Köcher schnell mit Flüssigkeit, so dass die Flüssigkeit bei Temperaturen unter dem Gefrierpunkt nach und nach gefriert und ein massiver Eisblock im Köcher entsteht. Die Waschlanze kann dann nicht mehr benutzt werden.

Um ein Verstopfen durch Abfall zu verhindern, ist bei bekannten Halterungen der Köcher an seinem unteren Ende ohne Boden ausgebildet sein, so dass weggeworfener Abfall am unteren Ende wieder herausfällt. Aber selbst in diesem Fall können größere Gegenstände, z.B. Zigarettenschachteln, in den Köcher gesteckt werden und dort verklemmen, so dass nachfolgend eingeworfene Gegenstände den Köcher weiter verstopfen.

Erfolgt der Flüssigkeitsablauf wie in DE 42 26 712 A1 beschrieben über ein Rohrstück in das Innere der Tragsäule, ist obige Lösung nicht möglich. Ein derartiger Flüssigkeitsablauf existiert auch bei Fahrzeugwaschanlagen, bei denen einerseits aus Frostschutzgründen ständig ein wenig Flüssigkeit durch die Waschlanze läuft, und andererseits aus Umweltschutzgründen ein geschlossener Flüssigkeitskreislauf zur Rückgewinnung dieser Flüssigkeit vorgesehen ist. Ein Verstopfen des Flüssigkeitsablaufs oder einer an diesen angeschlossenen Flüssigkeitsaufbereitungsanlage würde ebenfalls zu einem Stillstand der Anlage und großem Aufwand für die Reinigung bzw. Reparatur der Flüssigkeitsaufbereitungsanlage wie auch deren Zuleitungen führen.

Eine andere Halterung für eine Reinigungsbürste für Fahrzeuge offenbart die US 4 902 153. Das dortige Einschubfach ist unten geschlossen, ein darin enthaltene Flüssigkeit kann also nicht nach unten ablaufen. Vielmehr ist dort das Einschubfach soweit mit Wasser gefüllt, dass der eingesteckte Bürstenteil der Reinigungsbürste stets von Wasser bedeckt ist. Hierdurch sollen die Borsten des Bürstenteils weich und sauber gehalten und ihr Einfrieren im Winter verhindert werden. Ein Siebeinsatz, bei dem dass Wasser stets aus dem Einschubfach ablaufen würde, wäre hier geradezu widersinnig.

Die US 2006/162112 A1 offenbart eine Vorrichtung zur Ausgabe von Scheibenwaschmittel mit einem mit Scheibenwaschmittel gefüllten Behälter, in dem ein Scheibenabzieher mit daran angeordnetem Schwamm gehalten wird. Um ein Einfrieren des Scheibenwaschmittels und des Scheibenabziehers zu verhindern, ist im Bodenbereich des Behälters ein Heizelement angeordnet, wobei eine darüberliegende Aufnahme für den Scheibenabzieher vorgesehen ist. Die Aufnahme weist als Boden eine Lochplatte auf, wobei durch die Löcher unterhalb vom Heizelement erhitztes Scheibenwaschmittel nach oben in die Aufnahme steigen kann. Da durch die Benutzung des Scheibenabziehers zum Scheibenwaschen im Lauf der Zeit das Scheibenwaschmittel im Behälter abnimmt, kann über eine Zufuhrleitung Waschmittel in den Behälter automatisch nachgefüllt werden. Da das Waschmittel im Behälter geheizt wird, ist ein Flüssigkeitsablauf nicht nötig, sondern würde zu unerwünschtem Verlust von Scheibenwaschmittel aus dem Behälter führen.

Aus der US 2 849 588 A geht ein fahrbarer Eimer mit einem im Boden angeordneten Heizelement für Waschutensilien, beispielsweise einem Wischmopp, hervor. Hiermit kann bei der Bodenreinigung auch an Orten, an denen kein Warmwasseranschluss vorhanden ist, die im Eimer befindliche Waschflüssigkeit elektrisch erhitzt werden, so dass immer warme Waschflüssigkeit zur Verfügung steht. Um eine Berührung des Heizelements mit der Hand oder einem im Eimer abgestellten Wischmopp zu verhindern, und dennoch die im Eimer befindliche Waschflüssigkeit mit dem Heizelement aufheizen zu können, ist im Bodenbereich des Eimers knapp oberhalb des Heizelements eine Lochplatte mit einer Vielzahl von großen Löchern angeordnet. Um sich unterhalb der Lochplatte ansammelnden Bodensatz aus dem Eimer entfernen zu können, kann die Lochplatte aus dem Eimer herausgenommen werden. Hierzu sind die Löcher in der Bodenplatte so groß, dass mit den Fingern in die Löcher gegriffen und die Bodenplatte herausgenommen werden kann. Einen Flüssigkeitsablauf weist der Eimer nicht auf, da keine Waschflüssigkeit aus dem Eimer verloren gehen soll.

Aus der US 2003/0146144 A1 geht ein Waschbecken mit einem einsetzbaren Filtereinsatz hervor, welche denkbar ungeeignet für den Einsatz bei einer Halterung für eine Reinigungslanze sind.

Es ist deshalb Aufgabe der Erfindung, eine eingangs genannte Halterung für eine Reinigungslanze sowie eine Fahrzeugwaschanlage zu schaffen, welche die oben genannten Nachteile überwinden und ein Verstopfen des Flüssigkeitsablaufs der Halterung sowie einer evtl. nachgeschalteten Flüssigkeitsaufbereitungsanlage sicher verhindern, einfach zu reinigen sind und zuverlässig arbeiten.

Diese Aufgabe wird durch eine Halterung für eine Reinigungslanze mit den Merkmalen des Anspruchs 1 sowie eine Fahrzeugwaschanlage mit den Merkmalen des Anspruchs 13 gelöst. Vorteilhafte Ausgestaltungen und zweckmäßige Weiterbildungen der Erfindung sind in den Unteransprüchen angegeben.

Die erfindungsgemäße Halterung ist dadurch gekennzeichnet, dass sie ein in das Einschubfach einsteckbares Einschubsieb aufweist. Das Einschubsieb kann einfach von Hand aus dem Einschubfach herausgenommen, der darin befindliche Abfall entsorgt und das Einschubsieb dann wieder in das Einschubfach eingesteckt werden.

In einer vorteilhaften Ausführung der Erfindung kann im Einschubsieb ein flüssigkeitsdurchlässiges Filtermaterial angeordnet sein, welches in einer bevorzugten Weiterbildung herausnehmbar ausgestaltet sein kann. Hierzu können im Einschubsieb vorteilhaft Rückhaltemittel zum Halten des Filtermaterials im Einschubsieb vorgesehen sein. Hierdurch kann das Einschubsieb an unterschiedliche Gegebenheiten der Fahrzeugwaschanlage angepasst werden. Beispielsweise kann im Winter ein Filtermaterial mit größeren Poren verwendet werden, um ein Zufrieren des Filtermaterials sicher zu verhindern. Zudem kann hierdurch ein durch lange Verwendung verschmutztes und zugegangenes Filtermaterial einfach ersetzt werden.

In einer bedienungsfreundlichen Ausführung kann das Einschubsieb einen von der Einschuböffnung aus greifbaren Handgriff aufweisen, der bevorzugt bis nahe an die Einschuböffnung heranreicht. Hierdurch muss das Bedienungspersonal nicht sehr weit in die Einschuböffnung und das Einschubfach greifen, was gerade bei Verschmutzung mit großteiligem Abfall unangenehm ist.

In einer für den schnellen Austausch des Einschubsiebs vorteilhaften Ausgestaltung sind eine senkrecht zu einer Einschubrichtung verlaufende Außenkontur des Einschubssiebs und eine senkrecht zur Einschubrichtung verlaufende Innenkontur des Einschubfachs so aneinander angepasst, dass das Einschubsieb leicht in Einschubrichtung des Einschubfachs einsteckbar bzw. herausziehbar ist. Vorteilhaft können im Einschubfach und am Einschubsieb in Einschubrichtung verlaufende Führungsmittel vorgesehen werden, beispielsweise Führungsschienen am Einschubfach und entsprechende Führungsnuten am Einschubsieb oder umgekehrt.

Um das Einschubsieb in einer vorgegebenen Stellung im Einschubfach halten und ein Durchrutschen des Einschubsiebs verhindern zu können, ist in einer vorteilhaften Ausgestaltung ein Haltemittel vorgesehen, das ein Durchrutschen des Einschubsiebs durch das Einschubfach verhindern. In einer vorteilhaften Ausbildung kann das Haltemittel ein das Ablaufende des Einschubfachs verschließendes Gitter sein. Alternativ oder zusätzlich kann das Haltemittel ein oder mehrere in den Innenraum des Einschubfachs ragende Anschläge aufweisen, an die entsprechende Gegenanschläge des Einschubsiebs anschlagen.

Eine erfindungsgemäße Fahrzeugwaschanlage weist eine erfindungsgemäße Halterung auf. In einer vorteilhaften Ausgestaltung kann die Fahrzeugwaschanlage so ausgebildet sein, dass der Flüssigkeitsablauf der Halterung mit einer Flüssigkeitsaufbereitungsanlage der Fahrzeugwaschanlage verbunden ist. Hierdurch kann aus der Halterung ablaufende Flüssigkeit direkt der Flüssigkeitsaufbereitungsanlage zugeführt werden, ohne dass die Flüssigkeitsaufbereitungsanlage durch Abfälle oder Kleinpartikel verstopft oder verschmutzt wird. Vorteilhaft kann die Halterung Teil eines geschlossenen Flüssigkeitskreislaufs der Fahrzeugwaschanlage sein, so dass trotz der oft in die Halterung geworfenen Abfälle ein sicherer, zuverlässiger und gleichzeitig umweltfreundlicher Betrieb der Fahrzeugwaschanlage sichergestellt werden kann.

Weiter Besonderheiten und Vorzüge der Erfindung ergeben sich aus der folgenden Beschreibung eines bevorzugten Ausführungsbeispiels anhand der begleitenden Zeichnungen. Es zeigen:
- **Fig. 1**: eine schematische dreidimensionale Ansicht eines Teils einer erfindungsgemäßen Fahrzeugwaschanlage mit erfindungsgemäßer Halterung für eine Reinigungslanze 19;
- **Fig. 2**: einen Schnitt durch die in Fig. 1 gezeigte Fahrzeugwaschanlage;
- **Fig. 3**: eine schematische dreidimensionale Ansicht eines erfindungsgemäßen Einschubsiebs;
- **Fig. 4**: einen Querschnitt durch das Einschubsieb aus Fig. 3 in einer Querschnittsebene Q;
- **Fig. 5**: eine schematische Darstellung der erfindungsgemäßen Fahrzeugwaschanlage.

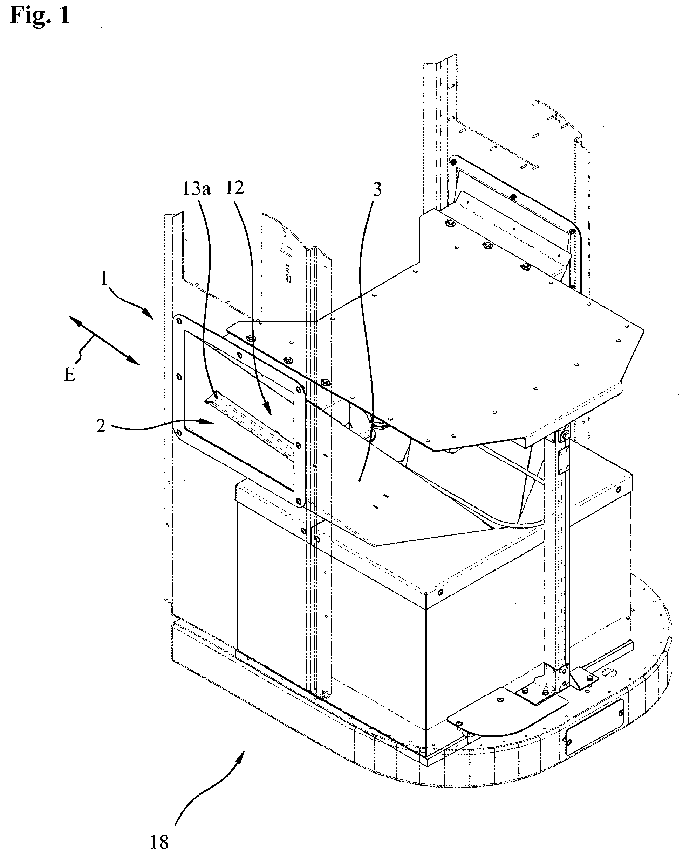

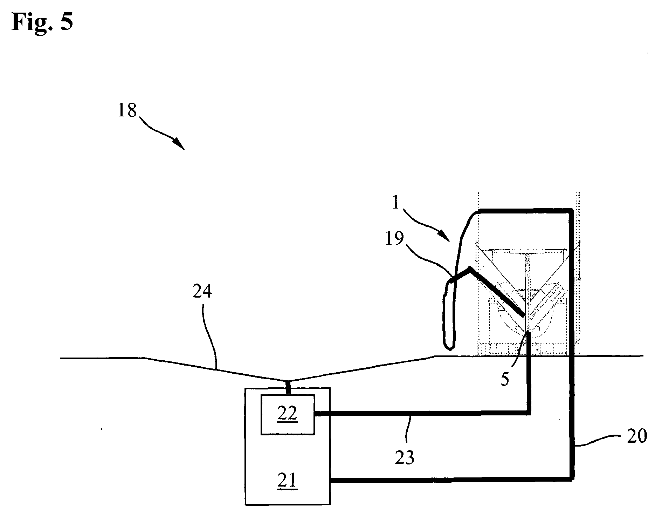

Eine in Fig. 1 gezeigte erfindungsgemäße Halterung 1 für eine in Fig. 5 gezeigte Reinigungslanze 19 einer erfindungsgemäßen Fahrzeugwaschanlage 18 weist ein mit einer Einschuböffnung 2 versehenes Einschubfach 3 auf. Das Einschubfach 3 dient zur Aufnahme zumindest des vorderen Endes der Reinigungslanze 19 mit der Reinigungsdüse, aus der Reinigungsflüssigkeit oder Wasser auf ein zu reinigendes Fahrzeug aufgebracht werden kann.

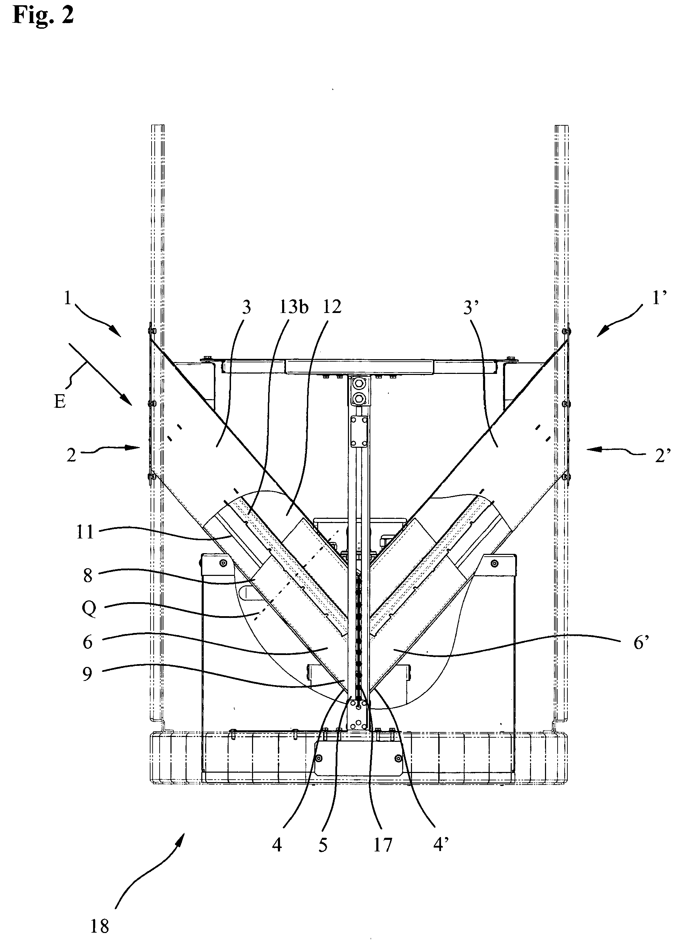

Das Einschubfach 3 verläuft von der Einschuböffnung 2 schräg nach unten zu einem Ablaufende 4 hin, an dem ein in Fig. 2 und 5 angedeuteter Flüssigkeitsablauf 5 vorgesehen ist. Der Flüssigkeitsablauf 5 leitet aus der Reinigungslanze 19 nachlaufende Flüssigkeit zu einer in Fig. 5 gezeigten Flüssigkeitsaufbereitungsanlage 22.

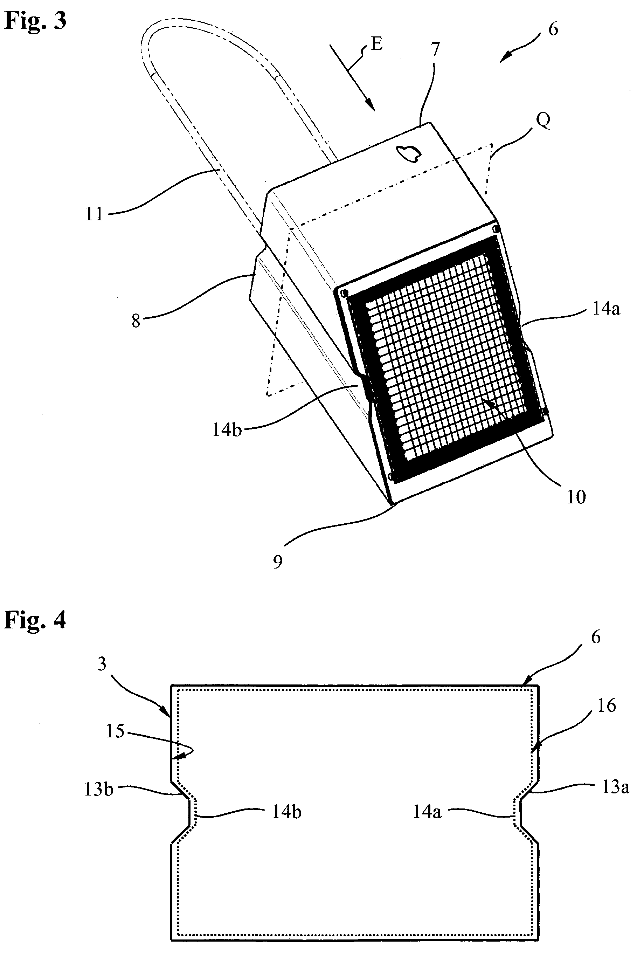

In das Einschubfach 3 kann von der Einschuböffnung 2 aus ein Einschubsieb 6 eingeschoben werden, welches in Fig. 3 detailliert dargestellt ist. Das Einschubsieb 6 umfasst einen im Querschnitt im wesentlichen rechteckförmigen Hohlkörper 7, wie der in Fig. 4 dargestellte Querschnitt durch eine Querschnittsebene Q in Fig. 3 zeigt.

Ein in Fig. 2 oberes Einschubende 8 des Einschubsiebs 6 ist nach oben offen, so dass die Reinigungslanze 19 bei in das Einschubfach 3 eingestecktem Einstecksieb 6 bis zu einem unteren Filterende 9 des Einstecksiebs 6 vorgeschoben werden kann. Der Hohlkörper 7 ist am Filterende 9 abgeschrägt, wobei die dortige Öffnung mit einem aus Drahtgewebe hergestellten Filtermaterial 10 verschlossen ist. Hierdurch kann Flüssigkeit aus der Reinigungslanze 19 durch das Filtermaterial 10 durchtreten, während in das Einschubfach 3 geworfene Festkörper zurückgehalten werden. Das Filtermaterial 10 ist fest am Hohlkörper 7 angebracht.

In einer alternativen, nicht gezeichneten Ausführung kann das Filtermaterial vorteilhaft aus dem Einschubsieb 6 herausnehmbar sein. Auch kann in einem weiteren, nicht gezeichneten Ausführungsbeispiel vorteilhaft ein relativ grobmaschiges Filtermaterial fest am Filterende 9 angebracht sein. Ein weiteres Filtermaterial, beispielsweise ein engmaschiges Filtergewebe oder Filterflies, kann dann von der Einschuböffnung 8 aus in das Einschubsieb 6 eingesetzt werden und wird durch das als Rückhaltemittel dienende grobmaschige Filtermaterial im Einschubsieb 6 gehalten.

Um dem Bedienpersonal das Entfernen von im Einschubsieb 6 gesammeltem Abfall zu erleichtern, ist am Einschubende 8 ein Handgriff 11 vorgesehen, welcher aus einem robusten, in Form einer offenen, U-förmigen Schlaufe gebogenen Runddraht besteht. Der Handgriff 11 reicht vom Einschubende 8 in Richtung der Einschuböffnung 2 bis nahe an die Einschuböffnung 2, kann also auch bei Positionierung des Einschubsiebs 6 ganz unten im Einschubfach 3 leicht von der Einschuböffnung 2 aus gegriffen werden.

Um das Einschieben und Herausziehen des Einstecksiebs 6 zu vereinfachen, sind am Einschubfach 3 zwei in einen Innenraum 12 des Einschubfachs 3 ragende Führungsschienen 13a bzw. 13b vorgesehen. Das Einstecksieb 6 weist hierzu korrespondierende, in Einschubrichtung E verlaufende Führungsnuten 14a bzw. 14b auf. Die Führungsschienen 13a, 13b bilden zusammen mit den Führungsnuten 14a, 14b ein Führungsmittel für das Einschubsieb 6, stellen also die sichere Führung des Einstecksiebs 6 im Einschubfach 3 bereit. Anstelle der gezeigten Ausführung können auch Führungsschienen am Einstecksieb 6 und entsprechende Führungsnuten am Einschubfach 3 angeordnet werden.

Wie aus dem Querschnitt durch Einschubfach 3 und Einstecksieb 6 in Fig. 4 hervorgeht, sind eine Innenkontur 15 des Einschubfachs 3 wie auch eine Außenkontur 16 des Einschubsiebs 6 so aneinander angepasst, dass das Einschubsieb 6 im Einschubfach 3 einfach und gut geführt wird. Grundsätzlich reicht diese Anpassung zur Führung des Einschubsiebs 6 im Einschubfach 3 aus, die Führungsschienen 13a, 13b und die Führungsnuten 14a, 14b können wie vorliegend aber als zusätzliche Führungshilfe vorgesehen werden.

Bei der gezeigten Ausführung wird ein Durchrutschen des Einstecksiebs 6 durch das Einschubfach 3 dadurch verhindert, dass zwei identisch ausgebildete Einschubfächer 3, 3' achsensymmetrisch zueinander angeordnet sind. Die Ablaufenden 4, 4' der Einschubfächer 3, 3' grenzen somit aneinander, so dass zwei eingesteckte Einschubsiebe 6, 6' an der Stoßstelle der Einschubfächer 3, 3' anstoßen. Um ein Verhaken der in die Halterungen 1, 1' eingesteckten Einstecksieben 6, 6' zu verhindern, ist am Ablaufende 4 des Einschubfachs 3 ein Gitterrost 17 angeordnet. Durch den Gitterrost 17 werden die Einschubsiebe 6, 6' sicher an den Ablaufenden 4, 4 der Einschubfächer 3, 3' gehalten, gleichwohl kann Flüssigkeit durch den Gitterrost 17 zum Flüssigkeitsablauf 5 ablaufen. Der Gitterrost 17 kann vorteilhaft auch bei nur einem Einschubfach 3 verwendet werden, um das Durchrutschen des Einstecksiebs 6 zu verhindern.

Bei der in Fig. 5 gezeigten Fahrzeugwaschanlage 18 ist die Reinigungslanze 19 in das Einschubfach 3 der Halterung 1 eingesteckt. Die Reinigungslanze 19 wird über eine Flüssigkeitszuleitung 20 mit Wasser oder Reinigungsflüssigkeit aus einer Flüssigkeitsversorgungsanlage 21 versorgt. Die Fahrzeugwaschanlage 18 ist so eingerichtet, dass durch die Reinigungsdüse der Reinigungslanze 19 stets eine gewisse Menge an Flüssigkeit fließt, um ein Vereisen der Reinigungsdüse zu verhindern. Die Flüssigkeitsversorgungsanlage 21 weist eine Flüssigkeitsaufbereitungsanlage 22 auf, welche über eine Rückleitung 23 aus dem Flüssigkeitsablauf 5 der Halterung 1 rücklaufende Flüssigkeit sowie aus einem Waschbereich 24 der Fahrzeugwaschanlage 18 ablaufendes Flüssigkeit zur erneuten Verwendung durch die Flüssigkeitsversorgungsanlage 21 aufbereitet. Durch die Verwendung der erfindungsgemäßen Halterung 1 mit Einschubsieb 6 wird sichergestellt, dass die Fahrzeugwaschanlage 18 zuverlässig und sicher betrieben werden kann, auch bei starker Verschmutzung des Einschubfachs 6.

## Patentansprüche

1. Halterung (1) für eine Reinigungslanze (19) mit einem Einschubfach (3) zur Aufnahme zumindest eines vorderen Endes der Reinigungslanze (19), wobei das Einschubfach (3) von einer Einschuböffnung (2) für die Reinigungslanze (19) schräg nach unten zu einem Ablaufende (4) mit einem Flüssigkeitsablauf (5) verläuft, **dadurch gekennzeichnet, dass** die Halterung (1) ein in das Einschubfach (3) einsteckbares Einschubsieb (6) aufweist.

2. Halterung (1) nach Anspruch 1, **dadurch gekennzeichnet, dass** am Einschubsieb (6) ein flüssigkeitsdurchlässiges Filtermaterial (10) angeordnet ist.

3. Halterung (1) nach Anspruch 2, **dadurch gekennzeichnet, dass** das Filtermaterial (10) aus dem Einschubsieb (6) herausnehmbar ist und das Einschubsieb (6) Rückhaltemittel zum Halten des Filtermaterials (10) im Einschubsieb (6) aufweist.

4. Halterung (1) nach einem der Ansprüche 2 oder 3, **dadurch gekennzeichnet, dass** das Einschubsieb (6) einen Hohlkörper (7) mit einem zur Einschuböffnung (2) hin offenen Einschubende (8) und einem durch das Filtermaterial (10) verschlossenen Filterende (9) aufweist.

5. Halterung (1) nach einem der voranstehenden Ansprüche, **dadurch gekennzeichnet, dass** das Einschubsieb (6) einen von der Einschuböffnung (2) aus greifbaren Handgriff (11) aufweist.

6. Halterung (1) nach einem der voranstehenden Ansprüche, **dadurch gekennzeichnet, dass** eine senkrecht zu einer Einschubrichtung (E) verlaufende Außenkontur (16) des Einschubsiebs (6) und eine senkrecht zu Einschubrichtung (E) verlaufende Innenkontur (15) des Einschubfachs (3) zum Führen des Einschubsiebs (6) im Einschubfach (3) aneinander angepasst sind.

7. Halterung (1) nach einem der voranstehenden Ansprüchen, **dadurch gekennzeichnet, dass** im Einschubfach (3) und am Einschubsieb (6) in Einschubrichtung (E) verlaufende Führungsmittel (13a, 13b, 14a, 14b) vorgesehen sind.

8. Halterung (1) nach Anspruch 7, **dadurch gekennzeichnet, dass** die Führungsmittel in einen Innenraum (12) des Einschubfachs (3) ragende Führungsschienen (13a, 13b) und entsprechende Führungsnuten (14a, 14b) am Einschubsieb (6) aufweisen.

9. Halterung (1) nach einem der voranstehenden Ansprüchen, **dadurch gekennzeichnet, dass** ein Haltemittel zum Halten des Einschubsiebs (6) in einer vorgegebenen Stellung im Einschubfach (3) vorgesehen ist.

10. Halterung (1) nach Anspruch 9, **dadurch gekennzeichnet, dass** das Haltemittel ein das Ablaufende (4) des Einschubfachs (3) verschließendes Gitter (17) ist.

11. Halterung (1) nach Anspruch 9, **dadurch gekennzeichnet, dass** das Haltemittel ein oder mehrere in den Innenraum (12) des Einschubfachs (3) ragende Anschläge aufweist, an die entsprechende Gegenanschläge des Einschubsiebs (6) anschlagen.

12. Halterung (1) nach Anspruch 11, **dadurch gekennzeichnet, dass** der oder die Anschläge am Ablaufende (4) des Einschubfachs (3) angeordnet sind.

13. Fahrzeugwaschanlage (18) mit einer Reinigungslanze (19) und einer Halterung (1) für die Reinigungslanze (19), **dadurch gekennzeichnet, dass** die Halterung (1) nach einem der voranstehenden Ansprüche ausgebildet ist.

14. Fahrzeugwaschanlage (18) nach Anspruch 13, **dadurch gekennzeichnet, dass** der Flüssigkeitsablauf (5) mit einer Flüssigkeitsaufbereitungsanlage (22) der Fahrzeugwaschanlage (18) verbunden ist.

15. Fahrzeugwaschanlage (18) nach Anspruch 13 oder 14, **dadurch gekennzeichnet, dass** die Halterung (1) Teil eines geschlossenen Flüssigkeitskreislaufs (19-23, 5, 6) der Fahrzeugwaschanlage (18) ist.

## Claims

1. Holder (1) for a cleaning lance (19) with an insertion compartment (3) for receiving at least a front end of the cleaning lance (19), the insertion compartment (3) running obliquely downwards from an insertion opening (2) for the cleaning lance (19) to an outlet end (4) with a liquid outlet (5), **characterised in that** the holder (1) exhibits an insertion strainer (6) which can be engaged in the insertion compartment (3).

2. Holder (1) according to claim 1, **characterised in that** a liquid-permeable filter material (10) is arranged in the insertion strainer (6).

3. Holder (1) according to claim 2, **characterised in that** the filter material (10) can be removed from the insertion strainer (6) and the insertion strainer (6) exhibits retaining means for holding the filter material (10) in the insertion strainer (6).

4. Holder (1) according to one of claims 2 or 3, **characterised in that** the insertion strainer (6) exhibits a hollow body (7) with an insertion end (8) open to the insertion opening (2) and a filter end (9) closed by the filter material (10).

5. Holder (1) according to one of the preceding claims, **characterised in that** the insertion strainer (6) exhibits a handle (11) which can be grasped from the insertion opening (2).

6. Holder (1) according to one of the preceding claims, **characterised in that** an external contour (16) of the insertion strainer (6) running perpendicularly to a direction of insertion (E) and an internal contour (15) of the insertion compartment (3) running perpendicularly to the direction of insertion (E) are matched to one another to guide the insertion strainer (6) in the insertion compartment (3).

7. Holder (1) according to one of the preceding claims, **characterised in that** guiding means (13a, 13b, 14a, 14b) running in the direction of insertion (E) are provided in the insertion compartment (3) and on the insertion strainer (6).

8. Holder (1) according to claim 7, **characterised in that** the guiding means exhibit guiding rails (13a, 13b) projecting into an internal chamber (12) of the insertion compartment (3) and corresponding guiding grooves (14a, 14b) on the insertion strainer (6).

9. Holder (1) according to one of the preceding claims, **characterised in that** a holding means is provided for holding the insertion strainer (6) in a predetermined position in the insertion compartment (3).

10. Holder (1) according to claim 9, **characterised in that** the holding means is a grille (17) closing the outlet end (4) of the insertion compartment (3).

11. Holder (1) according to claim 9, **characterised in that** the holding means exhibits one or more stops which project into the internal chamber (12) of the insertion compartment (3) and against which corresponding mating stops on the insertion strainer (6) come to bear.

12. Holder (1) according to claim 11, **characterised in that** the stop or stops are arranged at the outlet end (4) of the insertion compartment (3).

13. Vehicle washing installation (18) with a cleaning lance (19) and a holder (1) for the cleaning lance (19), **characterised in that** the holder (1) is embodied according to one of the preceding claims.

14. Vehicle washing installation (18) according to claim 13, **characterised in that** the liquid outlet (5) is connected to a liquid recycling installation (22) of the vehicle washing installation (18).

15. Vehicle washing installation (18) according to claim 13 or 14, **characterised in that** the holder (1) is part of a closed liquid circuit (19-23, 5, 6) of the vehicle washing installation (18).

## Revendications

1. Fixation (1) pour une lance de nettoyage (19) comprenant un tiroir (3) servant à recevoir au moins une extrémité avant de la lance de nettoyage (19), sachant que le tiroir (3) s'étend depuis une ouverture d'insertion (2) pour la lance de nettoyage (19) de manière oblique vers le bas jusqu'à une extrémité d'évacuation (4) dotée d'une évacuation de liquide (5), **caractérisée en ce que** la fixation (1) présente un tamis d'insertion (6) pouvant être placé dans le tiroir (3).

2. Fixation (1) selon la revendication 1, **caractérisée en ce qu'**un matériau filtrant (10) perméable au liquide est disposé au niveau du tamis d'insertion (6).

3. Fixation (1) selon la revendication 2, **caractérisée en ce que** le matériau filtrant (10) peut être retiré du tamis d'insertion (6), et **en ce que** le tamis d'insertion (6) présente des moyens de retenue servant à maintenir le matériau filtrant (10) dans le tamis d'insertion (6).

4. Fixation (1) selon l'une quelconque des revendications 2 ou 3, **caractérisée en ce que** le tamis d'insertion (6) présente un corps creux (7) doté d'une extrémité d'insertion (8) ouverte en direction de l'orifice d'insertion (2) et d'une extrémité filtrante (9) obstruée par le matériau filtrant (10).

5. Fixation (1) selon l'une quelconque des revendications précédentes, **caractérisée en ce que** le tamis d'insertion (6) présente une poignée (11) saisissable depuis l'orifice d'insertion (2).

6. Fixation (1) selon l'une quelconque des revendications précédentes, **caractérisée en ce qu'**un contour extérieur (16), s'étendant de manière perpendiculaire par rapport à une direction d'insertion (E), du tamis d'insertion (6) et un contour intérieur (15), s'étendant de manière perpendiculaire par rapport à la direction d'insertion (E), du tiroir (3) sont adaptés l'un à l'autre afin de guider le tamis d'insertion (6) dans le tiroir (3).

7. Fixation (1) selon l'une quelconque des revendications précédentes, **caractérisée en ce que** sont prévus, dans le tiroir (3) et au niveau du tamis d'insertion (6), des moyens de guidage (13a, 13b, 14a, 14b) s'étendant dans la direction d'insertion (E).

8. Fixation (1) selon la revendication 7, **caractérisée en ce que** les moyens de guidage présentent, au niveau du tamis d'insertion (6), des rails de guidage (13a, 13b) faisant saillie dans un espace intérieur (12) du tiroir (3) et des rainures de guidage (14a, 14b) correspondantes.

9. Fixation (1) selon l'une quelconque des revendications précédentes, **caractérisée en ce qu'**un moyen de retenue servant à maintenir le tamis d'insertion (6) est prévu dans le tiroir (3) dans une position prédéfinie.

10. Fixation (1) selon la revendication 9, **caractérisée en ce que** le moyen de retenue est un grillage (17) obturant l'extrémité d'évacuation (4) du tiroir (3).

11. Fixation (1) selon la revendication 9, **caractérisée en ce que** le moyen de retenue présente une ou plusieurs butées faisant saillie dans l'espace intérieur (12) du tiroir (3), contre lesquelles des contre-butées du tamis d'insertion (6) viennent buter.

12. Fixation (1) selon la revendication 11, **caractérisée en ce que** la ou les butées sont disposées au niveau de l'extrémité d'évacuation (4) du tiroir (3).

13. Installation de lavage de véhicule (18) équipée d'une lance de nettoyage (19) et d'une fixation (1) pour une lance de nettoyage (19), **caractérisée en ce que** la fixation (1) est réalisée selon l'une quelconque des revendications précédentes.

14. Installation de lavage de véhicule (18) selon la revendication 13, **caractérisée en ce que** l'évacuation de liquide (5) est reliée à une installation de traitement de liquide (22) de l'installation de lavage de véhicule (18).

15. Installation de lavage de véhicule (18) selon la revendication 13 ou 14, **caractérisée en ce que** la fixation (1) fait partie d'un circuit de liquide (19-23, 5, 6) fermé de l'installation de lavage de véhicule (18).
